# FASCICULE DE BREVET EUROPEEN

(11) **EP 0 565 447 B1**
(45) Date de publication et mention de la délivrance du brevet: **03.01.1996**
(21) Numéro de dépôt: 93400916.8
(22) Date de dépôt: 08.04.1993
(51) Int. Cl.: B65D 30/08, B65D 30/02, B65D 30/24, B32B 27/10

(54) **Sac en papier à valve**
Papiersack mit Ventil
Paper bag with valve

(30) Priorité: 10.04.1992 FR 9204462
(43) Date de publication de la demande: 13.10.1993
(73) Titulaire: LEMBACEL, F-69300 Caluire (FR)
(72) Inventeur: Parmentier, René, F-57680 Noveant sur Moselle (FR); Pompey, Jean-Marie, F-57680 Noveant sur Moselle (FR); Tirouflet, Jean-Pierre, F-51140 Prouilly (FR); Hallier, Dominique, F-26200 Montelimar (FR)
(74) Mandataire: Muller, René

(56) Documents cités:
- BE-A- 666 885
- FR-A- 975 895
- FR-A- 2 303 727
- FR-A- 2 398 672
- GB-A- 893 311
- GB-A- 1 471 464
- US-A- 2 025 568
- US-A- 2 415 387
- US-A- 4 606 951

## Description

La présente invention concerne les sacs en papier et notamment les sacs à valve.

Les sacs en papier sont constitués d'une ou de plusieurs feuilles, appelées plis. Ces différents plis sont généralement en papier, mais un ou plusieurs d'entre-eux peuvent être des films en matière plastique ou des films complexes sans que le sac ne perde l'appellation sac papier. Il est admis qu'un sac reste un sac papier s'il comporte plus de 50 % de papier en poids. Les films complexes sont des films obtenus soit par assemblage de plusieurs feuilles, soit par enduction d'une feuille de papier avec une matière plastique, soit par combinaison de ces deux possibilités. Les matières usuellement employées dans les complexes sont le papier, généralement en tant que support et le polyéthylène et/ou l'aluminium, et/ou d'autres matières.

Les matières plastiques sous forme de film ou de complexe, ou l'aluminium sous forme de complexe sont utilisés généralement pour leurs propriétés barrière anti-humidité ou anti-vapeur.

Les films plastique sont parfois également utilisés pour leurs propriétés de souplesse, de soudabilité, de brillance ou de transparence dans le cas de fenêtres par exemple.

Les contraintes actuelles liées à l'environnement mettent en valeur les points forts du papier qui sont sa biodégradabilité, sa recyclabilité et ses possibilités d'incinération sans dégagement réellement nocif.

En revanche, l'utilisation de matière plastique ou de complexes incorporant des matières plastiques pose différents problèmes. Le sac n'est plus biodégradable, le recyclage reste possible mais est beaucoup plus difficile et moins efficace, l'incinération est généralement plus nocive.

En outre, dans les sacs en papier à valve, c'est-à-dire comportant une valve formant un tube permettant le remplissage de sac au moyen d'une tubulure de remplissage, cette valve, incorporée à un fond croisé ou à un fond écorné, comprend parfois une pellicule de matière plastique mince s'étendant à l'intérieur du sac. Cette pellicule, après le remplissage, forme une fermeture automatique par le fait que la pellicule est progressivement comprimée sous l'effet de la matière ensachée. Cette pellicule de matière plastique est souvent associée à un flanc de papier pour former ce que l'on appelle une polyvalve. Un des inconvénients de l'utilisation d'une pellicule de matière plastique, outre les inconvénients déjà cités précédemment, est qu'elle n'assure pas toujours une bonne étanchéité après le remplissage, cela en raison notamment de l'adhérence qu'elle peut avoir avec la tubulure utilisée pour le remplissage, qui lorsqu'elle est séparée du sac après remplissage a tendance à entraîner avec elle la pellicule de matière plastique.

Pour pallier à ces inconvénients, la demanderesse propose d'utiliser dans les sacs papier, une matière papetière présentant des propriétés permettant de supprimer totalement ou tout au moins partiellement l'utilisation de films de matières plastiques ou complexes incorporant des matières plastiques.

L'invention propose un sac en papier comprenant au moins un pli de valve constitué par une pellicule cellulosique. Par pellicule cellulosique, on entend selon l'invention une pellicule (ou film), formée essentiellement à partir d'un polymère naturel à base de cellulose régénérée.

La pellicule cellulosique est utilisée en tant que pli de valve notamment dans des sacs écornés ou à fond croisé en papier.

Dans cette application selon l'invention, la pellicule cellulosique peut constituer l'ensemble de la valve, par exemple dans le cas de valves tubulaires soudées après remplissage du sac. Elle peut aussi constituer le pli dépassant à l'intérieur du sac d'une valve à deux plis appelée polyvalve. Dans cette application, le pli en pellicule cellulosique, par sa souplesse, assure une très bonne étanchéité après remplissage du sac.

D'autres types de valves peuvent avantageusement, selon l'invention, utiliser un pli en pellicule cellulosique en remplacement d'un pli en matière plastique. On peut citer par exemple une valve comme décrit dans la publication FR-A-1 367 557 ou une valve comme décrite dans la publication FR-A-2 303 727 ou comme décrit dans la publication FR-A-2 464 892, publications desquelles l'homme de métier pourra tirer l'enseignement nécessaire.

La pellicule cellulosique peut ainsi être enduite d'un vernis nitrocellulosique. Par le choix d'adjuvants tels que des résines, des plastifiants, des cires, on peut rendre la pellicule cellulosique scellable ou non-scellable, améliorer ses propriétés anti-barrière, etc...

Comme décrit précédemment, la pellicule cellulosique utilisée en tant que pli de valve selon l'invention peut être collée sur un pli de papier.

Selon une caractéristique avantageuse de l'invention, on utilise en tant que colle pour l'adhésion du pli de valve formé de la pellicule cellulosique sur un pli papier une dispersion aqueuse à base de copolymère acrylique. Cette colle présente une grande machinabilité et elle ne provoque pas de retrait de la pellicule cellulosique, ni d'ondulations. Enfin elle conserve son pouvoir adhésif dans le temps.

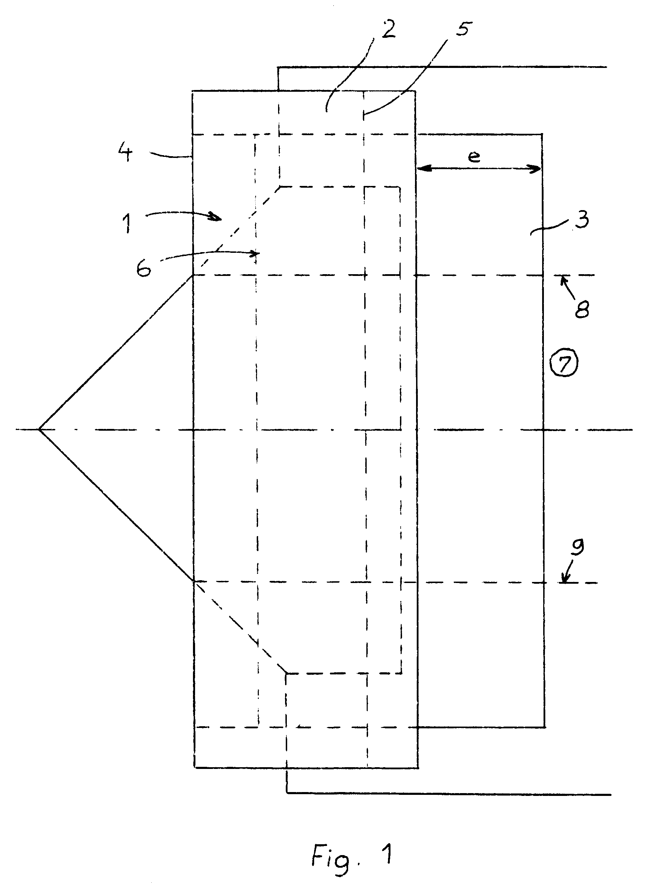

D'autres caractéristiques et avantages de l'invention apparaitront dans la suite de la description d'un exemple de sac utilisant une pellicule cellulosique en tant que pli de valve dans une polyvalve papier/pellicule, comme décrit dans l'exemple ci-après, en référence à la figure 1.

La figure 1 représente un exemple de polyvalve selon l'invention collée sur un fond de sac.

La polyvalve 1 papier/pellicule est obtenue par superposition d'un pli papier 2 et d'une pellicule cellulosique 3 décalés longitudinalement l'un par rapport à l'autre, d'une longueur e de 40 mm environ. La pellicule cellulosique de largeur légèrement plus étroite que le pli papier peut être collée sur ce pli papier à l'aide d'une colle formée d'une dispersion aqueuse à base d'un copolymère acrylique. Elle peut aussi, en variante, être enduite sur la face placée vers l'intérieur de la valve par un vernis nitrocellulosique qui rend cette face thermo-scellable.

L'ensemble est replié selon une ligne perpendiculaire 4 au sens longitudinal, à une distance de 60 mm environ du bord 5 du papier. Le bord de la pellicule cellulosique est représenté par la ligne 6. L'ensemble se trouve positionné dans le fond 7 du sac avant fermeture et est conformé lors de la fermeture du sac. La largeur du fond du sac en papier est représentée par les lignes 8 et 9.

La souplesse de la pellicule de la partie dépassant à l'intérieur du sac, surtout lorsqu'elle est enduite d'un vernis nitrocellulosique, assure une bonne étanchéité de la valve une fois le sac rempli. Lors du remplissage du sac, on n'observe aucune adhésion entre la pellicule et la tubulure de remplissage qui peut alors être séparée du sac sans entraîner la partie libre de la pellicule.

Comme indiqué précédemment, la pellicule cellulosique est formée d'un polymère naturel à base de cellulose régénérée. Cette cellulose régénérée peut être obtenue par le procédé viscose qui de façon connue comporte plusieurs phases et notamment une préparation de l'alkali cellulose à partir d'une pâte de bois, suivie d'une transformation en xanthate de cellulose que l'on met en solution dans de la soude caustique diluée pour obtenir la solution de viscose. Cette solution de viscose est transformée en pellicule cellulosique à l'aide d'une filière à fente généralement immergée dans un bain d'acide sulfurique. La pellicule passe ensuite par différents traitements, notamment des traitements pour compléter la coagulation, des traitements de désulfurisation, des traitements de blanchiment, de plastification, etc...

D'autres procédés de régénération de la cellulose peuvent aussi être utilisés.

Le film cellulosique peut être utilisé tel quel, non enduit, ou au contraire enduit selon l'application.

Les films enduits peuvent être enduits par des vernis et éventuellement par des enduits polymériques et copolymériques.

La pellicule cellulosique utilisée dans le cadre de l'invention présente généralement une épaisseur comprise entre 15 et 50 µm environ. Sa masse volumique est comprise entre 1,2 à 1,5 kg/dm³ environ. Son module d'élasticité est de l'ordre de 2 à 6 gigapascals.

La polyvalve papier/pellicule cellulosique peut être utilisée pour tous les types de sac papier pouvant être remplis de manière mécanique. Ces sacs sont par exemple des sacs de grande contenance pour les produits de l'industrie, notamment de l'industrie chimique et de l'agro-alimentaire.

La pellicule cellulosique présente des qualités lui permettant d'être au contact direct de denrées alimentaires.

Le sac en papier comprenant selon l'invention au moins un pli de valve constitué par une pellicule cellulosique formée essentiellement à partir d'un polymère naturel à base de cellulose régénérée présente des propriétés et des performances supérieures en termes de facilité de remplissage mécanique et d'étanchéité à celles présentées par un sac utilisant des plis de valve en matière plastique et il y ajoute ses propriétés de biodégradabilité et/ou de facilité de recyclage.

## Revendications

1. Sac en papier à valve, caractérisé en ce qu'il comprend au moins un pli de valve constitué par une pellicule cellulosique formée essentiellement à partir d'un polymère naturel à base de cellulose régénérée.

2. Sac en papier selon la revendication 1, caractérisé en ce que le pli en pellicule cellulosique est un pli de valve d'une polyvalve papier/pellicule cellulosique.

3. Sac en papier, selon une des revendications 1 à 2, caractérisé en ce que le pli cellulosique est obtenu par le passage dans une filière à fente d'une solution de viscose.

4. Sac en papier selon une des revendications 1 à 3, caractérisé en ce que le pli de pellicule cellulosique est collé sur un pli papier à l'aide d'une colle formée d'une dispersion aqueuse à base d'un copolymère acrylique.

5. Polyvalve pour sac papier, caractérisée en ce qu'elle est formée d'au moins un pli de papier et d'au moins un pli en pellicule cellulosique.

6. Polyvalve selon la revendication 5, caractérisée en ce que le pli en pellicule cellulosique est revêtu d'un enduit nitrocellulosique au moins sur sa face placée vers l'intérieur de la valve.

## Claims

1. A paper sack with a valve characterised in that it comprises at least one valve flap formed by a cellulose film made essentially from a recycled cellulose based natural polymer.

2. A paper sack according to claim 1 characterised in that the cellulose film flap is a valve flap with a cellulose film paper multivalve.

3. A paper sack according to claim 1 or 2 characterised in that the cellulose film is obtained by the passage through a slotted die in a viscose solution.

4. A paper sack according to any one of claims 1 to 3 characterised in that the cellulose film flap is stuck on a paper flap with the aid of an adhesive formed on an aqueous dispersion having an acrylicopolymer basis.

5. A multivalve for a paper sack characterised in that it is formed from at least one paper flap and at least one flap with a cellulose film.

6. A multivalve according to claim 5 characterised in that the cellulose film flap is covered with a nitro cellulose coating at least on its surface facing towards the interior of the valve.

## Patentansprüche

1. Ventilpapiersack, **dadurch gekennzeichnet, daß** er wenigstens eine Ventillage umfaßt, die aus einem Cellulosefilm besteht, der im wesentlichen ausgehend von einem natürlichen Polymer auf der Grundlage regenerierter Cellulose gebildet ist.

2. Papiersack nach Anspruch 1, **dadurch gekennzeichnet, daß** die Lage aus einem Cellulosefilm eine Ventillage aus einem Papier/Cellulosefilm-Mehrfachventil ist.

3. Papiersack nach Anspruch 1 oder 2, **dadurch gekennzeichnet, daß** die Celluloselage mittels Strömen einer Viskoselösung durch eine Schlitzspinndüse erhalten worden ist.

4. Papiersack nach einem der Ansprüche 1 bis 3, **dadurch gekennzeichnet, daß** die Lage aus dem Cellulosefilm auf eine Papierlage mit einem Klebstoff geklebt wird, der aus einer wäßrigen Dispersion auf der Grundlage eines Acrylcopolymers gebildet ist.

5. Mehrfachventil für Papiersäcke, **dadurch gekennzeichnet, daß** es aus wenigstens einer Papierlage und wenigstens einer Lage aus einem Cellulosefilm gebildet ist.

6. Mehrfachventil nach Anspruch 5, **dadurch gekennzeichnet, daß** die Lage aus Cellulosefilm wenigstens auf der Seite, die zum Inneren des Ventils zeigt, mit einem Nitrocelluloseüberzug beschichtet ist.
